## Europäisches Patentamt
## European Patent Office
## Office européen des brevets

(11) Publication number: **0 077 764**
A1

(12) **EUROPEAN PATENT APPLICATION**

(21) Application number: **82870052.6**

(22) Date of filing: **13.10.82**

(51) Int. Cl.³: **G 01 L 9/08**
**G 01 F 1/32**

(30) Priority: **15.10.81 US 311542**

(43) Date of publication of application:
**27.04.83 Bulletin 83/17**

(84) Designated Contracting States:
**CH DE FR GB IT LI NL SE**

(71) Applicant: **FISHER CONTROLS INTERNATIONAL, INC.**
**7711 Bonhomme**
**Clayton Missouri 63105(US)**

(72) Inventor: **Burlage, Brian Joseph**
**Rural Route 3**
**Marshalltown Iowa 50158(US)**

(72) Inventor: **Wiklund, David Eugene**
**3103 Fieldcrest**
**Marshalltown Iowa 50158(US)**

(72) Inventor: **Lenz, Gary Alan**
**2204 South Fifth Avenue**
**Marshalltown Iowa 50158(US)**

(74) Representative: **McLean, Peter et al,**
**Monsanto Europe S.A. Patent Department Avenue de**
**Tervuren 270-272 Letter Box No 1**
**B-1150 Brussels(BE)**

(54) **Piezoelectric pressure sensor.**

(57) A piezoelectric pressure sensor, preferably for a vortex-shedding flowmeter. A piezoelectric transducer is located in a sensor chamber between and in physical contact with a vibratory diaphragm and a chamber surface. Pressure fluctuations in a von Karman vortex street outside the diaphragm compress the transducer, between the diaphragm and chamber surface. The transducer generates a responsive electrical signal which is related to the pressure fluctuations.

Fig.3

## PIEZOELECTRIC PRESSURE SENSOR

This invention relates to a fluid pressure sensor, and more particularly, to a piezoelectric, vortex-shedding flowmeter pressure sensor.

Certain bluff bodies, when placed in fluid flow paths, shed vortices in a stable vortex formation known as a von Karman vortex street. With preferred bodies, the spacing of the vortices of the von Karman vortex street is sufficiently constant over desireable ranges of fluid velocities that vortex frequency can be considered proportional to fluid velocity. Vortex frequency can be measured by sensing the frequency of fluid pressure fluctuation at a fixed point in the street, since the pressure at the fixed point fluctuates between a first pressure, when a vortex is present at the point, and a second pressure, when a vortex is absent.

Piezoelectric material is a desirable material as a pressure sensor. The material operates without external power supply, and responds well to applied pressure fluctuation, with an electrical signal which can be amplified for electronic processing. As a result, piezoelectric material would seem an obvious choice for the sensing of fluid pressure in a von Karman vortex street. Recognition of this desirability was evidenced long ago in U.S. Patents 2,809,520; 3,116,639 and 3,218,852.

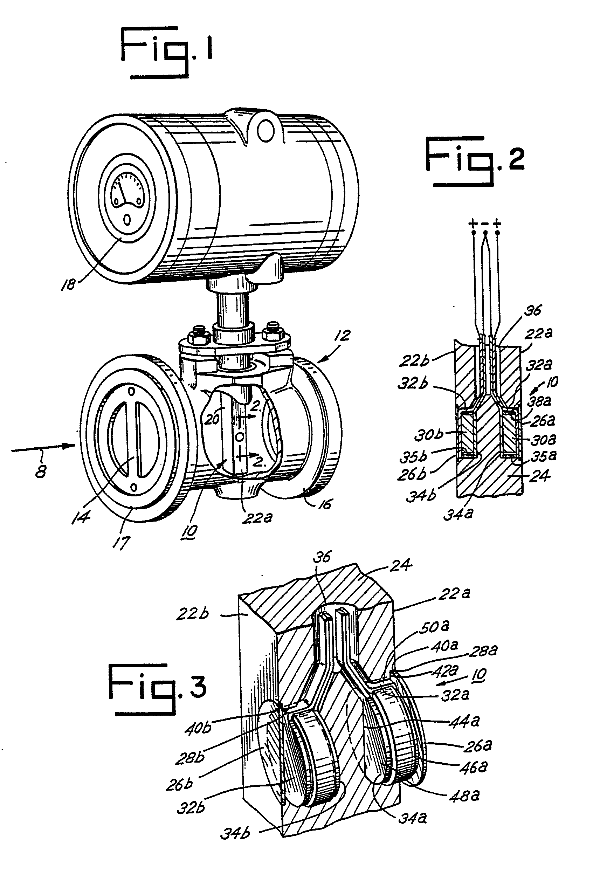

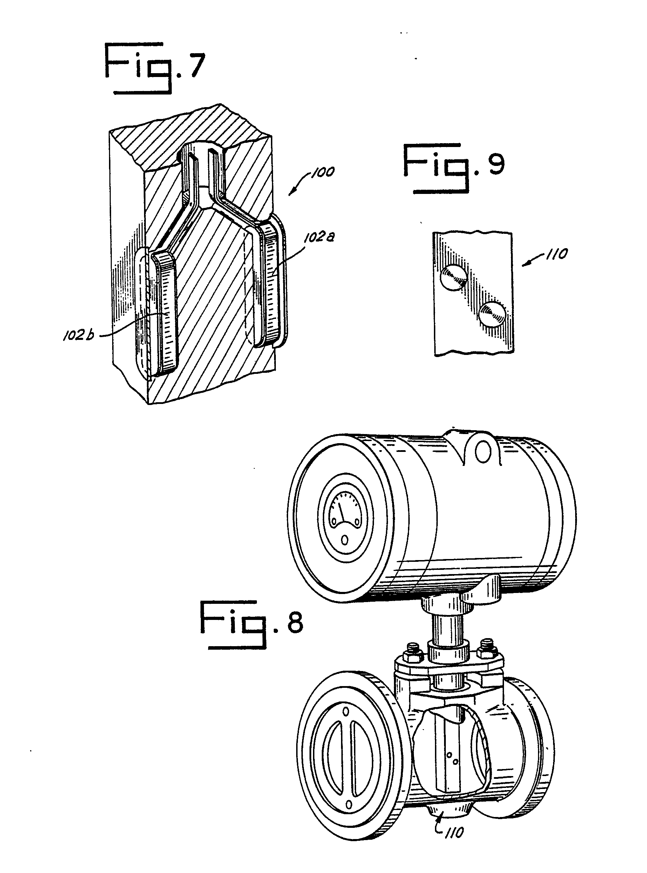

However, only one vortex-shedding flowmeter pressure sensor that employs piezoelectric material is known to have been offered commercially. This sensor is disclosed in Figures 1-8 of U.S. Patent 4,085,614, (hereinafter Curran et al.) issued April 25, 1978 to John R. Curran et al. for a Vortex Flow Meter Transducer.

While the identified sensor of Curran et al may be advantageous, it involves many parts and the filling of a chamber with oil. (See Figure 7 of Curran et al.) As a result, assembly may be complex. Moreover, the piezoelectric disc employed in the sensor operates in a flexure mode. (Curran et al, column 7, lines 31-35.) I.e., the center of the disc moves laterally relative to the disc edges such that the disc is flexed into varying degrees of curvature. This mode of operation requires relatively wide deflection of the piezoelectric disc for signal generation. Wide deflection of the disc entails wide deflection of the diaphragms of the sensor, which causes diaphragm fatigue and rupture to be a stated concern (Curran et al, column 6, lines 47-51 and column 10, lines 19-21). While Curran et al suggests piezoelectric elements other than the circular, ceramic disc of Figures 1-8 (Curran et al, column 7, lines 16-19) the three alternatives suggested (in Figures 9-13 and columns 9-11) all operate in the flexure mode, and only the embodiments with oil-filled chambers, those of Figures 11-13, have the preferred (column 6, lines 43-47), circular diaphragm. Thus, Curran et al teach and suggest several embodiments of a piezoelectric, vortex-shedding flowmeter pressure sensor which is not wholly advantageous. Simplicity and ruggedness remain in the art as unachieved objectives.

In sum, piezoelectric materials have been long known to be desirable for vortex-shedding flow meter pressure sensors, but the art to date has failed to discover a simplified, rugged piezoelectric sensor suitable for commercial offering. As a result, most commercial offerings of sensors continue to be of the hot wire and other non-piezoelectric types.

## SUMMARY OF THE INVENTION

An object of this invention is to provide a piezoelectric pressure sensor which is suitable for sensing dynamic fluid pressure.

Another object of this invention is to provide a piezoelectric pressure sensor which is suitable for a vortex-shedding flowmeter.

Another object of the invention is to provide a piezoelectric pressure sensor suitable for a vortex-shedding flowmeter which is also ingeniously simple.

A fourth object of the invention is to provide an ingeniously simple piezoelectric sensor for a vortex-shedding flowmeter, which is rugged enough to withstand the high frequency vibrations of a von Karman vortex street (e.g., 10-120 Hz for liquid, 100-1200 Hz for gas in a 50mm conduit), without damage from fatigue or rupture, throughout an extended useful life.

These and other objects and advantages are satisfied by the invention, which, in principal aspect, is a fluid pressure sensor comprising a sensor body, a piezoelectric transducer and a vibratory diaphragm. The sensor body defines a sensor chamber with a chamber opening and a chamber surface opposite the opening. The diaphragm is mounted on the body and seals the opening. The transducer is located in the sensor chamber between the diaphragm and the chamber surface. The transducer is in contact with the diaphragm and chamber surface. The relative rigidities of the chamber surface, diaphragm and transducer are such that pressure fluctuations outside the chamber against the diaphragm cause compression fluctuations in the transducer. The transducer responsively generates an electrical signal related to the compression fluctuations, and the pressure fluctuations.

In this aspect, the invention is a pressure sensor operating in a compression mode, as opposed to a flexure mode. The compression mode involves relatively no deflection, as compared to a flexure mode. In addition, the invention is a sensor in which the diaphragm is in physical contact with the transducer, and the transducer is in physical contact with the chamber surface. The diaphragm is physically supported by the transducer and chamber surface. Pressure on the diaphragm is directly transmitted to the transducer. As a result of the mode of operation and the physical contact, relatively no stress, fatigue and rupture of the diaphragm occurs, as compared with the sensor of Curran et al.

Further, the direct physical contact of the diaphragm and transducer involves a simplicity which is ingenious, especially as compared to the commercially-offered sensor of Curran et al. Components such as the oil fill, oil ports, spacer rings and clamp rings are absent from the inventive sensor, resulting in ease of manufacture and economy.

These and other objects, aspects and advantages of the invention are further detailed in the description which follows.

## BRIEF DESCRIPTION OF THE DRAWINGS

The preferred embodiments of the invention are described in relation to the accompanying drawing. The drawing consists of nine figures, wherein:

Figure 1 is a perspective view of a vortex-shedding flowmeter, cut away to reveal the location of the first preferred embodiments of the invention;

Figure 2 is a broken, cross-section and schematic view of the first preferred embodiment, taken along line 2-2 in Figure 1;

Figure 3 is a perspective view of the first preferred embodiment, with some elements cross-sectioned as in Figure 2 and others shown in full, for clarity;

Figure 4 is a cut-away, perspective view of a second preferred embodiment of the invention;

Figure 5 is a broken cross-section view of the second preferred embodiment, taken along line 5-5 in Figure 4;

Figure 6 is an exploded, perspective view of the second preferred embodiment;

Figure 7 is a perspective view similar to Figure 3 of a third preferred embodiment of the invention;

Figure 8 is a perspective view similar to Figure 1 of a flow meter cut away to reveal a fourth preferred embodiment of the invention; and

Figure 9 is a broken, side elevation view of the fourth preferred embodiment.

### DETAILED DESCRIPTION OF THE PREFERRED EMBODIMENTS

Referring to the accompanying drawing, the first preferred embodiment of the invention is a fluid pressure sensor generally designated 10. Referring to Figure 1, the sensor 10 is located within and as part of a vortex-shedding flowmeter generally designated 12. The purpose of the meter 12 is to measure the velocity of a fluid flowing within a pipe (not shown). The meter 12 includes pipe sections 16 and 17 to be fitted to the pipe, and velocity reporting or recording instruments such as electronic signal conditioning and enhancing circuitry associated with a gauge 18.

The meter 12 operates by creating a von Karman vortex street in the pipe section 16, and measuring the frequency of fluid pressure fluctuations at a fixed point in the street. In the embodiment illustrated, a bluff body 14 is adapted to cause the street within the pipe section 16. Fluid flows past the body 14 in the direction of the arrow 8. A sensor-carrying body 20 (also a bluff body) is located downstream of the separation point of the bluff body 14, within the wake thereof, with two (one is shown in Figure 1) side surfaces 22a, 22b parallel to and directly inside the rows of the street. The vortices of one row pass directly beside one side surface 22a; the vortices of the other row pass directly beside the other side surface 22b. Thus, the frequency of pressure fluctuations in the street can be measured at the side surfaces 22a, 22b.

The frequency is measured by the sensor 10, which is located on and within the body 20. The sensor includes the portion 24 of the body 20 adjacent the vortex rows, and two vibratory diaphragms 26a, 26b. One diaphragm 26a is located on the one side surface 22a, and the other diaphragm 26b is located on the other side surface 22b.

The sensor further includes two sensor chambers 28a, 28b; two piezoelectric discs 30a, 30b; two pairs 32a, 34a and 32b, 34b of electrical leads; and two electrical insulators 35a, 35b. The sensor chambers 28a, 28b extend generally perpendicular to the body side surfaces 22a, 22b. The piezoelectric discs 30a, 30b are located within the chambers 28a, 28b and the leads 32a, 32b, 34a, 34b extend from within the chambers through a passage 36 in the body 20 toward the gauge 18. The leads are electrically connected to the signal conditioning and enhancing circuitry.

The pairs of sensor chambers 28a, 28b; discs 30a, 30b; leads 32a, 34a, 32b, 34b; and insulators 35a, 35b are substantially identical to each other. The chamber 28a, disc 30a, and leads 32a, 34a are mirror images of the chamber 28b, disc 30b, and leads 32b, 34b, respectively. For clarity of drawing and description, only chamber 28a, disc 30a, leads 32a, 34a and insulator 35a are now described.

Chamber 28a is a substantially cylindrical boring, with a counterbore. A sidewall 38a of the chamber 28a extends from a substantially circular chamber opening in the body side surface 22a, inward of the body portion 24. The sidewall 38a has a substantially uniform diameter, from a ledge 42a adjacent the body side surface 22a to a substantially circular, inner chamber surface 44a. The surface 44a meets the sidewall 38a to form the "bottom" of the chamber 28a. The surface 44a is substantially planar, substantially circular, and parallels the side surface 22a and ledge 42a.

The ledge 42a supports the periphery of the diaphragm 26a, which is a thin, circular member. The diameters of the sidewall portion 40a and diaphragm 26a are sized to provide a snug fit between the diaphragm 26a and sidewall portion 40a. The width of the sidewall portion 40a is sized to provide for support of the diaphragm 26a by the ledge 42a, with the outer surface of the diaphragm 26a being substantially coplanar with the body side surface 22a.

The diaphragm 26a is secured to the ledge 42a. A laser weld may, for example, seal the diaphragm 26a about its periphery to the ledge. The seal isolates the interior of the chamber 28a from the fluid in the flowmeter 12, to provide a benign environment for the disc 30a, leads 32a, 34a and insulator 35a. The laser weld is especially desirable for the seal, to eliminate disc damage from overheating.

The disc 30a is fitted within the chamber 28a between the two leads 32a, 34a, and the insulator 35a. The disc 30a is in direct physical contact with the leads and insulator, and thereby in indirect physical contact with the diaphragm 26a, the inner chamber surface 44a and the sidewall 38a. More specifically, the disc 30a is sandwiched between a thin, planar and circular portion 46a of the lead 32a and a substantially identical portion 48a of the lead 34a. The lead portion 46a is parallel to, and abuts, the diaphragm 26a over its whole surface, while the lead portion 48a is parallel to, and abuts, the chamber inner surface 44a over its whole surface. The insulator 35a extends around the edge of the disc 30a along the chamber sidewall 38a, from one side of the narrow strip 50a to the other side thereof.

The disc 30a, leads 32a, 34a, and insulator 35a are snugly dry-mounted in the chamber 28a, with allowance for disc dimensional changes on the order of several microinches. They are not attached to each other in the chamber 28a, or to the diaphragm 26a or body 20. No fluid is present in the chamber 28a.

The disc 30a is a piezoelectric transducer, and more specifically, a cylindrical disc of ceramic or crystalline material having piezoelectric properties. One such disc is made by the Vernitron Corporation of Bedford, Ohio. Compression across the opposite, planar surfaces of the disc causes the disc to generate positive and negative charges at the opposite surfaces. These charges are related to the amount of compression across the disc.

The generated charges are carried by the leads 32a, 34a to the gauge 18. Electrical contact with the charged surfaces of the disc 30a is provided by the circular portions 46a, 48a of the leads. The leads are formed by copper deposit on a polyimide film, etching to remove undesired deposit, application of a second film, and stamping to separate completed leads.

The insulator 35a is also formed of an insulation (e.g., polyimide) coated copper or other stiff and springy material. The polyimide film completely envelopes the copper. The insulator is initially formed as a flat strip, with the copper providing the support and flexibility required for shaping of the insulator 35a.

The disc 30a is thus held within the chamber 28a, between the diaphragm 26a and chamber surface 44a. The rigidities of the chamber surface 44a, disc 30a and diaphragm 26a are related such that pressure fluctuations applied against the diaphragm 26a cause compression fluctuations in the disc 30a. Since the disc 30a responds to compression fluctuations with an electrical signal related to the compression fluctuations, and since the compression fluctuations are related to the pressure fluctuations, the signal of the disc 30a is related to the pressure fluctuations. Thus, the frequency of pressure fluctuations adjacent the one body side surface 22a can be determined from the frequency of the signal of the disc 30a.

It should be understood that each disc 30a, 30b generates an electrical signal.  The signals have the same frequency, since the vortex rows have the same frequency.  As a result, the signals may be electronically processed together or separately, as desired, to record or report the frequency of fluid pressure fluctuations in the street, and thereby the velocity of the fluid.  One desired processing alternative is the subtraction of signals from the sensor pair to achieve a high signal to noise ratio.

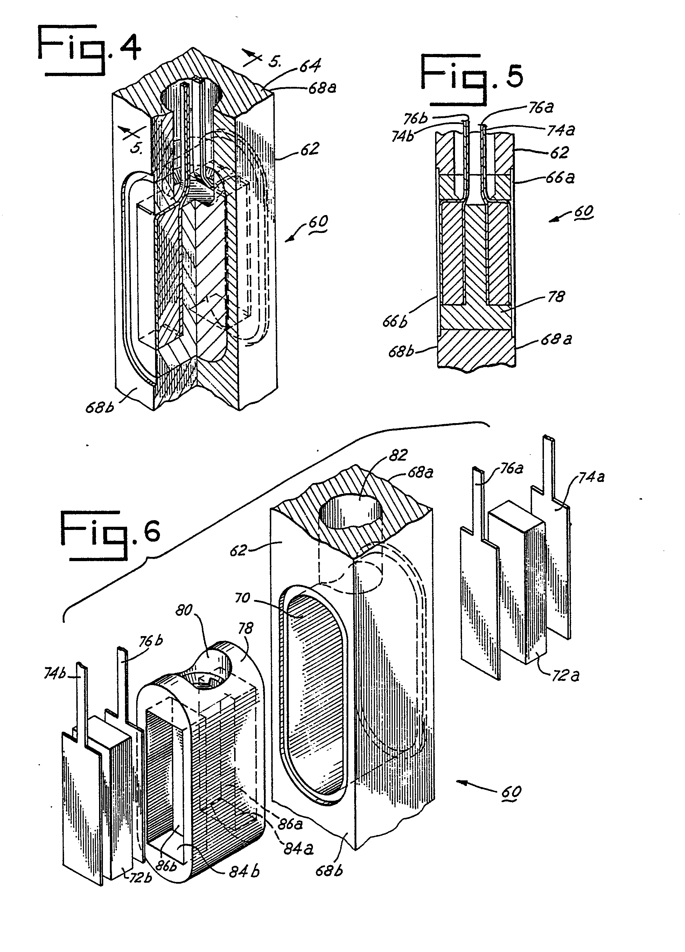

The first preferred embodiment is now described.  Referring to Figures 4-6, the second preferred embodiment is a fluid pressure sensor generally designated 60.  The sensor 60 includes a portion 64 of a body 62, and two vibratory diaphragms 66a, 66b (not shown in Figures 4 and 6, for clarity).  One diaphragm 66a is located on one side surface 68a of the body 64, and the other diaphragm 66b is located on the opposite side surface 68b of the body 64.

The sensor 60 further includes a sensor chamber 70; two piezoelectric plates 72a, 72b; two pairs 74a, 76a and 74b, 76b of electrical leads; and an electrical insulator body 78.  The sensor chamber 70 extends generally perpendicular to the body side surfaces 68a, 68b through the body portion 64.  In planes parallel to the body side surfaces 68a, 68b, the sensor chamber 70 is oblate in shape, as are the diaphragms 66a, 66b.

The insulator 78 occupies the chamber 70. The insulator 78 is externally shaped to match the chamber 70. A passage 80 in the insulator 78 is aligned with a passage 82 in the body portion 64, and opens into two plate chambers 84a, 84b in the insulator 78. The piezoelectric plates 72a, 72b and the leads 74a, 76a, 74b, 76b are located within the chambers 84a; 84b, respectively. The leads extend from within the chambers 84a, 84b through the passages 80, 82.

In further detail, the sensor 60 is similar to the sensor 10. For example, the plates 72a, 72b are sandwiched between their respective leads 74a, 76a, 74b, 76b in indirect physical contact with the respective diaphragms 66a, 66b and inner chamber surfaces 86a, 86b.

Referring to Figure 7, the third preferred embodiment is a sensor 100. The sensor 100 is substantially identical to the sensor 10. The exception is that the piezoelectric elements 102a, 102b are oblate and the sensor chambers, leads and diaphragms are shaped to match. Physical interrelationships are retained, and function is enhanced, as with sensor 60, by the increased dimension of the piezoelectric elements in a direction transverse to the street.

Referring to Figures 8 and 9, the fourth preferred embodiment is a sensor 110 having the enhanced function of the sensors 60, 100 achieved by pairing piezoelectric discs 30a, 30b and the associated structure of the sensor 10 with two further, spaced discs 30a, 30b and structure (30b discs not shown), for a total of four discs. In structure, the sensor 10 is equivalent to two sensors 10, with the leads of the 30a discs connected and the leads of the 30b discs connected.

The preferred embodiments of the invention have now been described in detail, with the non-sensor aspects of the illustrated flowmeter only generally described, for clarity. However, it should be understood that while the invention is described in the context of a specific type of vortex-shedding flowmeter for which it is especially adapted, the invention is not restricted to such an application. Vortex-shedding flowmeters of various types may include the invention, as may non-vortex-shedding flowmeters. For example, a vortex-shedding flowmeter with a single bluff body may include the invention. As another example, a vortex-shedding flowmeter may include the invention positioned on a wall of the meter. Moreover, the invention may be applied to diverse flow measurement apparatus, such as may be used in ducts, open channels and wherever the sensing of dynamic fluid pressure is desired.

Thus, while preferred embodiments of the present invention have been described and illustrated in specific applications, the invention should not be limited thereto, but may be otherwise embodied within the scope of the following claims.

C L A I M S

1. A dynamic fluid pressure sensor comprising:

a sensor body (20) defining a sensor chamber (28a) with a chamber opening and a chamber surface (44a) opposite the opening;

a vibratory diaphragm (26a) mounted on the body and sealing the opening; and

a piezoelectric transducer (30a) located in the sensor chamber between the diaphragm and the chamber surface, the transducer being in contact with the diaphragm and the chamber surface, with the relative rigidities of the chamber surface, transducer and diaphragm being such that pressure fluctuations outside the chamber against the diaphragm cause compression fluctuations in the transducer, and with the transducer orientated such that compression fluctuations of the transducer between the diaphragm and chamber surface cause the transducer to responsively generate an electrical signal related to the compression fluctuations, and thereby the pressure fluctuations.

2. A dynamic fluid pressure sensor as in Claim 1 further comprising a pair of electrical leads (32a, 34a) to the transducer, one of the electrical leads being positioned between the diaphragm and the transducer in direct physical contact with the diaphragm and transducer, and the other of the electrical leads being positioned between the transducer and the chamber surface in direct physical contact with the transducer and chamber surface.

3. A dynamic fluid pressure sensor as in Claim 1 or Claim 2 in which the sensor body defines a chamber wall (38a) between the chamber opening and chamber surface, and the transducer has an edge, the sensor further comprising means (35a) for electrically insulating the transducer along the edge, the insulating means being mounted along the edge against the chamber wall.

4.    A dynamic fluid pressure sensor as in Claim 1, 2 or 3, in which the sensor chamber is substantially cylindrical, the chamber opening, chamber surface and diaphragm are substantially circular, and the transducer is a substantially cylindrical disc.

5.    A dynamic fluid pressure sensor as in Claim 1, 2 or 3, in which the sensor chamber is substantially oblate, the chamber opening, chamber surface and diaphragm are substantially oblate, and the transducer is a substantially oblate element.

6.    In a vortex-shedding flowmeter having a bluff body (14), generating a von Karman vortex street of two rows of vortices in a flow of fluid, and a sensor carrying body (20), the improvement comprising :

a portion of the sensor-carrying body defining two sensor chambers (28a, b) extending generally perpendicular to the side surfaces (22a, b) from the side surfaces into the portion, with chamber openings at the side surfaces and chamber surfaces (44a, b) opposite the openings;

two diaphragms (26 a, b), one of the diaphragms (26a) being mounted on the body to one of the side surfaces (22a) and sealing one of the chamber openings and the other of the diaphragms (26 b) being mounted on the body to the other of the side surfaces (22 b) and sealing the other of the chamber openings;

two piezoelectric transducers (30a, b), one of the transducers (30a) being located in the one sensor chamber (28a) between the one diaphragm (26a) and one of the chamber surfaces (44a), the one transducer being in contact with the one diaphragm and the one chamber surface, with the relative rigidities of the one chamber surface, the one transducer and the one diaphragm being such that pressure fluctuations in one of the rows of vortices outside the one chamber against the one diaphragm cause compression fluctuations in the one transducer, and with the one transducer orientated such that compression fluctuations of the one transducer between the one diaphragm and the one chamber surface cause the one transducer to generate a first electrical signal related to the compression fluctuations, and thereby the pressure fluctuations, in the one row of vortices, and

the other of the transducers (30b) being located in the other sensor chamber (28b) between the other diaphragm (26b) and the other chamber surface (44b), the other transducer being in contact with the other diaphragm and the other chamber surface, with the relative rigidities of the other chamber surface, the other transducer and the other diaphragm being such that pressure fluctuations in the other of the rows of vortices outside the other chamber against the other diaphragm cause compression fluctuations in the other transducer, and with the other transducer orientated such the compression fluctuations of the other transducer between the diaphragm and the other chamber surface cause the other transducer to generate a second electrical signal related to the compression fluctuations, and thereby the pressure fluctuations, in the other row of vortices.

7.    A dynamic fluid pressure sensor comprising :

a sensor body (64) defining a sensor chamber (70) with a sensor chamber opening;

an insulator body (78) occupying the sensor chamber and defining a transducer chamber (84a) with a transducer chamber opening and a chamber surface (86a) opposite the opening;

a vibratory diaphragm (66a) mounted on the body and sealing the openings; and

· a piezoelectric transducer (72a) located in the transducer chamber (84a) between the diaphragm and the chamber surface, the transducer being in contact with the diaphragm and the chamber surface, with the relative rigidities of the chamber surface, transducer and diaphragm being such that pressure fluctuations outside the chamber against the diaphragm cause compression fluctuations in the transducer, and with the trans-

21-56-5501  0077764

ducer orientated such that compression fluctuations of the
transducer between the diaphragm and chamber surface cause the
transducer to responsively generate an electrical signal related to the compression fluctuations, and thereby the pressure
fluctuations.

**Fig.1**

**Fig.2**

**Fig.3**

Fig.4

Fig.5

Fig.6

Fig.7

100

102a

102b

Fig.9

110

Fig.8

110

## 0077764

European Patent
Office

**EUROPEAN SEARCH REPORT**

Application number

EP 82 87 0052

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 01 L 9/08 |
| X | US-A-4 165 654 (F.G.HAMMITT, J.G.HWANG) *Abstract; figures 1-4; column 1, lines 35-58; column 3, line 9-49* | 1-4,6-7 | G 01 F 1/32 |
| | --- | | |
| Y | PATENTS ABSTRACTS OF JAPAN, vol. 3, no. 21(E-92), 21st February 1979, page 129E92; & JP - A - 53 149 360 (YOKOGAWA DENKI SEISAKUSHO K.K.) (26-12-1978) *Abstract* | 1,4,6-7 | |
| | --- | | |
| Y | (R.E.GARFORD AND G.J.THOMBLIN) *Figure 1; page 1, lines 8-17,31-95; page 1, line 120 - page 2, line 16* | 1-4,7 | |
| | --- | | TECHNICAL FIELDS SEARCHED (Int. Cl. ³) |
| Y | (S.T.MARKS) *Figure 1; column 1, lines 53-65* | 1-4 | |
| | ----- | | G 01 F G 01 L G 01 P |

The present search report has been drawn up for all claims

| Place of search | Date of completion of the search | Examiner |
|---|---|---|
| THE HAGUE | 24-01-1983 | NUIJTEN E.M. |